# EUROPEAN PATENT APPLICATION

(11) **EP 3 282 620 A1**
(43) Date of publication of application: **14.02.2018**
(21) Application number: 15891542.1
(22) Date of filing: 14.05.2015
(51) Int. Cl.: H04L 1/18

(54) **DATA SENDING METHOD AND APPARATUS**

(71) Applicant: Huawei Technologies Co., Ltd., Longgang District Shenzhen, Guangdong 518129 (CN)
(72) Inventor: QUAN, Wei, Shenzhen Guangdong 518129 (CN); LI, Bingzhao, Shenzhen Guangdong 518129 (CN); ZHANG, Jian, Shenzhen Guangdong 518129 (CN); YANG, Xiaodong, Shenzhen Guangdong 518129 (CN); HU, Zhenxing, Shenzhen Guangdong 518129 (CN); MIAO, Jinhua, Shenzhen Guangdong 518129 (CN)
(74) Representative: Maiwald Patentanwalts GmbH
(86) International application number: PCT/CN2015/078980
(87) International publication number: WO 2016/179839

(57) **Abstract**

Embodiments of the present invention provide a data sending method and apparatus, and relate to the wireless communications field, so as to effectively ensure high reliability for transmitting uplink data and effectively reduce a delay in transmitting uplink data. Resource configuration information sent by a base station is received, and uplink data is sent to the base station according to the resource configuration information. The data sending method and apparatus are used to transmit data.

## Description

### TECHNICAL FIELD

The present invention relates to the field of wireless communications, and in particular, to a data sending method and apparatus.

### BACKGROUND

At present, in a wireless communications system, a base station (for example, an evolved NodeB (evolved Node B, eNB)) may pre-allocate a radio resource to user equipment (User Equipment, UE) by using a pre-scheduling method. When the UE needs to transmit uplink data, the UE may directly transmit the uplink data by using the radio resource pre-allocated to the UE, so as to reduce or avoid execution of a scheduling request (Scheduling Request, SR)-buffer status report (Buffer Status Report, BSR) process, and reduce a delay in transmitting the uplink data. For example, the eNB allocates a radio resource to the UE according to a first period. When the UE needs to transmit uplink data or receive downlink data, the UE may transmit the uplink data or receive the downlink data on the radio resource allocated to the UE. A minimum configuration of the first period according to which the eNB periodically allocates a radio resource to the UE is 10 milliseconds (ms).

However, delay and reliability are usually contradictory. When high reliability of data transmission is required, more times of transmission are usually required, thereby affecting delay performance; and vice versa. Therefore, how to ensure high reliability of data transmission while reducing a delay in transmitting uplink data when UE transmits data is an urgent problem to be resolved.

### SUMMARY

Embodiments of the present invention provide a data sending method and apparatus, so as to effectively ensure high reliability for transmitting uplink data and effectively reduce a delay in transmitting uplink data.

To achieve the foregoing objective, the following technical solutions are adopted in the embodiments of the present invention.

According to a first aspect, a data sending method is provided, including:
receiving, by user equipment, resource configuration information sent by a base station; and
sending, by the user equipment, uplink data to the base station according to the resource configuration information.

With reference to the first aspect, in a first possible implementation, the resource configuration information includes a period of a radio resource, where the radio resource is allocated by the base station to the user equipment; and
the sending, by the user equipment, uplink data to the base station according to the resource configuration information includes:
determining, by the user equipment, that a time for retransmitting second uplink data is the same as a time that is for transmitting first uplink data and that is determined according to the period; and
transmitting, by the user equipment, the first uplink data or retransmitting, by the user equipment, the second uplink data according to a priority, where the priority is used to indicate a priority level for transmitting the first uplink data or retransmitting the second uplink data, where
the priority is preconfigured by the user equipment, or the priority is further included in the resource configuration information.

In this way, when the user equipment determines, according to the resource configuration information sent by the base station, that the time for retransmitting the second uplink data is the same as the time that is for transmitting the first uplink data and that is determined according to the period, the user equipment transmits the first uplink data or retransmits the second uplink data according to the priority level that is indicated by the priority and that is for transmitting the first uplink data or retransmitting the second uplink data, thereby resolving a conflict in transmitting the first uplink data or retransmitting the second uplink data, reducing a delay in transmitting the first uplink data or retransmitting the second uplink data, and ensuring high reliability for transmitting the first uplink data or retransmitting the second uplink data.

With reference to the first possible implementation, in a second possible implementation, the resource configuration information further includes at least one of simultaneous transmission information, duration, or priority threshold information, where the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

With reference to the first possible implementation or the second possible implementation, in a third possible implementation, before the sending, by the user equipment, uplink data to the base station according to the resource configuration information, the method further includes:
receiving, by the user equipment, a first activation command that is sent by the base station at a media access control layer or physical layer, where
when the first activation command includes a radio resource, the first activation command is used to activate the radio resource indicated in the first activation command;
when the resource configuration information includes a radio resource, the first activation command is used to activate the radio resource indicated in the resource configuration information.

With reference to the first aspect, in a fourth possible implementation, the resource configuration information includes information about a first radio resource and information about a second radio resource, where the first radio resource is used to transmit uplink data by at least two user equipments, and the at least two user equipments include the user equipment; the second radio resource includes at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data; and
the sending, by the user equipment, uplink data to the base station according to the resource configuration information includes:
sending, by the user equipment on a first radio sub-resource, first indication information that the first radio resource is occupied, where the first radio sub-resource is a radio sub-resource that is of the at least two radio sub-resources and that is corresponding to the user equipment; and
sending, by the user equipment, the uplink data to the base station on the first radio resource.

In this way, the user equipment sends, on the first radio sub-resource, the first indication information that the first radio resource is occupied, so that the user equipment can send the uplink data to the base station on the first radio resource. Therefore, the first uplink data is transmitted or the second uplink data is retransmitted by using the first radio resource that is in the resource configuration information and that is corresponding to the second radio resource. This resolves a conflict in transmitting the first uplink data or retransmitting the second uplink data, reduces a delay in transmitting the first uplink data or retransmitting the second uplink data, and ensures high reliability for transmitting the first uplink data or retransmitting the second uplink data.

With reference to the fourth possible implementation, in a fifth possible implementation, before the sending, by the user equipment, the uplink data to the base station on the first radio resource, the method further includes:
receiving, by the user equipment, a second activation command that is sent by the base station at the media access control layer or physical layer, where the second activation command is used to activate the first radio resource and the second radio resource that are indicated in the resource configuration information.

With reference to the fourth possible implementation or the fifth possible implementation, in a sixth possible implementation, the resource configuration information further includes at least one of a first time period, rule indication information, or priority indication information, where the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

With reference to the sixth possible implementation, in a seventh possible implementation, before the sending, by the user equipment on a first radio sub-resource, first indication information that the first radio resource is occupied, the method further includes:
determining, by the user equipment according to the rule indication information, the first radio sub-resource that the user equipment needs to use to transmit the first indication information.

With reference to the seventh possible implementation, in an eighth possible implementation, the method further includes:
detecting, by the user equipment, that the user equipment adjacent to the user equipment transmits second indication information by using a second radio sub-resource.

With reference to the eighth possible implementation, in a ninth possible implementation, the sending, by the user equipment on a first radio sub-resource, first indication information that the first radio resource is occupied includes:
when the user equipment does not obtain, by means of detection, that the user equipment adjacent to the user equipment transmits the second indication information by using the second radio sub-resource, sending, by the user equipment on the first radio sub-resource, the first indication information that the first radio resource is occupied.

With reference to the ninth possible implementation, in a tenth possible implementation, the sending, by the user equipment, the uplink data to the base station on the first radio resource includes:
when the user equipment does not obtain, by means of detection, that the user equipment adjacent to the user equipment transmits the second indication information by using the second radio sub-resource, sending, by the user equipment, the uplink data to the base station on the first radio resource; or
when the user equipment does not obtain, by means of detection, that the user equipment adjacent to the user equipment transmits the second indication information by using the second radio sub-resource whose priority, indicated by the priority indication information, is higher than a priority of the first radio sub-resource, sending, by the user equipment, the uplink data to the base station on the first radio resource.

With reference to the seventh possible implementation, in an eleventh possible implementation, the sending, by the user equipment on a first radio sub-resource, first indication information that the first radio resource is occupied includes:
determining, by the user equipment according to the priority indication information, that it is unnecessary to detect that the user equipment adjacent to the user equipment transmits second indication information by using a second radio sub-resource; and sending, by the user equipment on the first radio sub-resource, the first indication information that the first radio resource is occupied.

With reference to the eleventh possible implementation, in a twelfth possible implementation, the sending, by the user equipment, the uplink data to the base station on the first radio resource includes:
indicating, by using the priority indication information, that the priority of the first radio sub-resource is the highest; and sending, by the user equipment, the uplink data to the base station on the first radio resource.

With reference to the first aspect and the first to twelfth possible implementations, in a thirteenth possible implementation, the resource configuration information includes the period of the radio resource, where the radio resource is allocated by the base station to the user equipment, and the period is less than 10 milliseconds ms.

According to a second aspect, a data sending method is provided, including:
obtaining, by a base station, resource configuration information; and
sending, by the base station, the resource configuration information to user equipment.

With reference to the second aspect, in a first possible implementation, the resource configuration information includes a period of a radio resource, where the period is used by the user equipment to determine a time for transmitting first uplink data, and the radio resource is allocated by the base station to the user equipment; and the resource configuration information further includes a priority, where the priority is used to indicate a priority level for the user equipment to transmit the first uplink data or retransmit the second uplink data.

With reference to the first possible implementation, in a second possible implementation, the resource configuration information further includes at least one of simultaneous transmission information, duration, or priority threshold information, where the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

With reference to the second possible implementation, in a third possible implementation, after the sending, by the base station, the resource configuration information to user equipment, the method further includes:
sending, by the base station to the user equipment, a first activation command at a media access control layer or physical layer, where
when the first activation command includes a radio resource, the first activation command is used to activate the radio resource indicated in the first activation command;
when the resource configuration information includes a radio resource, the first activation command is used to activate the radio resource indicated in the resource configuration information.

With reference to the second aspect, in a fourth possible implementation, the resource configuration information includes information about a first radio resource and information about a second radio resource, where the first radio resource is used to transmit uplink data by at least two user equipments, and the at least two user equipments include the user equipment; the second radio resource includes at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data.

With reference to the fourth possible implementation, in a fifth possible implementation, after the sending, by the base station, the resource configuration information to user equipment, the method further includes:
sending, by the base station to the user equipment, a second activation command at the media access control layer or physical layer, where the second activation command is used to activate the first radio resource and the second radio resource that are indicated in the resource configuration information.

With reference to the fifth possible implementation, in a sixth possible implementation, the resource configuration information further includes at least one of a first time period, rule indication information, or priority indication information, where the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

With reference to any one of the second aspect and the first to sixth possible implementations, in a seventh possible implementation, the resource configuration information includes the period of the radio resource, where the radio resource is allocated by the base station to the user equipment, and the period is less than 10 milliseconds ms.

According to a third aspect, user equipment is provided, including:
a receiving unit, configured to receive, according to control of a processing unit, resource configuration information sent by a base station;
a sending unit, configured to send uplink data to the base station according to the control of the processing unit and according to the resource configuration information; and
the processing unit, configured to: control the receiving unit to receive the resource configuration information sent by the base station, and control the sending unit to send the uplink data to the base station according to the resource configuration information.

With reference to the third aspect, in a first possible implementation, the resource configuration information includes a period of a radio resource, where the radio resource is allocated by the base station to the user equipment;
the processing unit is further configured to:
determine that a time for retransmitting second uplink data is the same as a time that is for transmitting first uplink data and that is determined according to the period; and
the sending unit is specifically configured to:
transmit the first uplink data or retransmit the second uplink data according to a priority, where the priority is used to indicate a priority level for transmitting the first uplink data or retransmitting the second uplink data, where
the priority is preconfigured by the user equipment, or the priority is further included in the resource configuration information.

With reference to the first possible implementation, in a second possible implementation, the resource configuration information further includes at least one of simultaneous transmission information, duration, or priority threshold information, where the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

With reference to the first possible implementation or the second possible implementation, in a third possible implementation, the receiving unit is further configured to:
receive a first activation command that is sent by the base station at a media access control layer or physical layer, where
when the first activation command includes a radio resource, the first activation command is used to activate the radio resource indicated in the first activation command;
when the resource configuration information includes a radio resource, the first activation command is used to activate the radio resource indicated in the resource configuration information.

With reference to the third aspect, in a fourth possible implementation, the resource configuration information includes information about a first radio resource and information about a second radio resource, where the first radio resource is used to transmit uplink data by at least two user equipments, and the at least two user equipments include the user equipment; the second radio resource includes at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data; and
the sending unit is specifically configured to:
send, on a first radio sub-resource, first indication information that the first radio resource is occupied, where the first radio sub-resource is a radio sub-resource that is of the at least two radio sub-resources and that is corresponding to the user equipment; and
send the uplink data to the base station on the first radio resource.

With reference to the fourth possible implementation, in a fifth possible implementation, the receiving unit is further configured to:
receive a second activation command that is sent by the base station at the media access control layer or physical layer, where the second activation command is used to activate the first radio resource and the second radio resource that are indicated in the resource configuration information.

With reference to the fourth possible implementation or the fifth possible implementation, in a sixth possible implementation, the resource configuration information further includes at least one of a first time period, rule indication information, or priority indication information, where the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

With reference to the sixth possible implementation, in a seventh possible implementation,
the processing unit is configured to determine, according to the rule indication information, the first radio sub-resource that the user equipment needs to use to transmit the first indication information.

With reference to the seventh possible implementation, in an eighth possible implementation, the processing unit is further configured to:
detect that the user equipment adjacent to the user equipment transmits second indication information by using a second radio sub-resource.

With reference to the eighth possible implementation, in a ninth possible implementation, the sending unit is specifically configured to:
when the user equipment does not obtain, by means of detection, that the user equipment adjacent to the user equipment transmits the second indication information by using the second radio sub-resource, send, on the first radio sub-resource, the first indication information that the first radio resource is occupied.

With reference to the ninth possible implementation, in a tenth possible implementation, the sending unit is specifically configured to:
when the user equipment does not obtain, by means of detection, that the user equipment adjacent to the user equipment transmits the second indication information by using the second radio sub-resource, send the uplink data to the base station on the first radio resource; or
when the user equipment does not obtain, by means of detection, that the user equipment adjacent to the user equipment transmits the second indication information by using the second radio sub-resource whose priority, indicated by the priority indication information, is higher than a priority of the first radio sub-resource, send the uplink data to the base station on the first radio resource.

With reference to the seventh possible implementation, in an eleventh possible implementation, the sending unit is specifically configured to:
determine, according to the priority indication information, that it is unnecessary to detect that the user equipment adjacent to the user equipment transmits the second indication information by using the second radio sub-resource; and send, on the first radio sub-resource, the first indication information that the first radio resource is occupied.

With reference to the eleventh possible implementation, in a twelfth possible implementation, the sending unit is specifically configured to:
indicate, by using the priority indication information, that the priority of the first radio sub-resource is the highest; and send the uplink data to the base station on the first radio resource.

With reference to the third aspect and the first to twelfth possible implementations, in a thirteenth possible implementation, the resource configuration information includes the period of the radio resource, where the radio resource is allocated by the base station to the user equipment, and the period is less than 10 milliseconds ms.

According to a fourth aspect, a base station is provided, including:
a processing unit, configured to obtain resource configuration information; and
a sending unit, configured to send the resource configuration information to user equipment.

With reference to the fourth aspect, in a first possible implementation, the resource configuration information includes a period of a radio resource, where the period is used by the user equipment to determine a time for transmitting first uplink data, and the radio resource is allocated by the base station to the user equipment; and the resource configuration information further includes a priority, where the priority is used to indicate a priority level for the user equipment to transmit the first uplink data or retransmit the second uplink data.

With reference to the first possible implementation, in a second possible implementation, the resource configuration information further includes at least one of simultaneous transmission information, duration, or priority threshold information, where the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

With reference to the first or second possible implementation, in a third possible implementation, the sending unit is further configured to:
send, to the user equipment, a first activation command at a media access control layer or physical layer, where
when the first activation command includes a radio resource, the first activation command is used to activate the radio resource indicated in the first activation command;
when the resource configuration information includes a radio resource, the first activation command is used to activate the radio resource indicated in the resource configuration information.

With reference to the fourth aspect, in a fourth possible implementation, the resource configuration information includes information about a first radio resource and information about a second radio resource, where the first radio resource is used to transmit uplink data by at least two user equipments, and the at least two user equipments include the user equipment; the second radio resource includes at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data.

With reference to the fourth possible implementation, in a fifth possible implementation, the sending unit is further configured to:
send, to the user equipment, a second activation command at the media access control layer or physical layer, where the second activation command is used to activate the first radio resource and the second radio resource that are indicated in the resource configuration information.

With reference to the fifth possible implementation, in a sixth possible implementation, the resource configuration information further includes at least one of a first time period, rule indication information, or priority indication information, where the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

With reference to any one of the fourth aspect and the first to sixth possible implementations, in a seventh possible implementation, the resource configuration information includes the period of the radio resource, where the radio resource is allocated by the base station to the user equipment, and the period is less than 10 milliseconds ms.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a data sending method according to an embodiment of the present invention;
FIG. 2 is a flowchart of another data sending method according to an embodiment of the present invention;
FIG. 3 is a schematic structural diagram of a radio resource according to an embodiment of the present invention;
FIG. 4 is a flowchart of still another data sending method according to an embodiment of the present invention;
FIG. 5 is a schematic structural diagram of user equipment according to an embodiment of the present invention; and
FIG. 6 is a schematic structural diagram of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

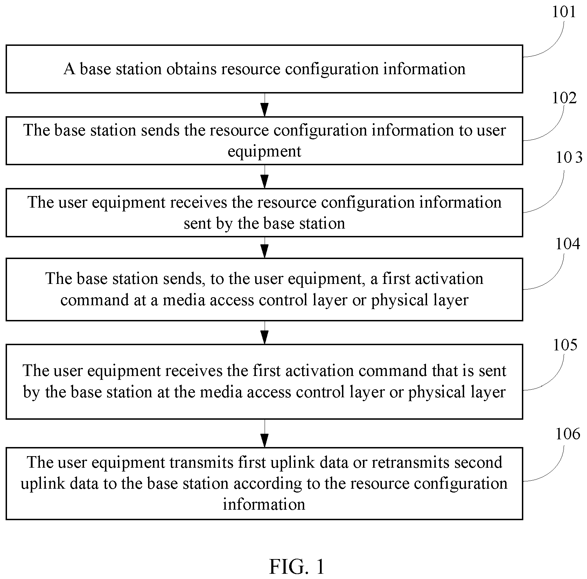

An embodiment of the present invention provides a data sending method. As shown in FIG. 1, the method includes the following steps.

Step 101. A base station obtains resource configuration information.

The resource configuration information includes a period and a priority of a radio resource. The radio resource is allocated by the base station to the user equipment. Optionally, the period may be less than 10 milliseconds (millisecond, ms).

The period is used by the user equipment to determine a time for transmitting first uplink data. The radio resource is allocated by the base station to the user equipment. The priority is used to indicate a priority level for the user equipment to transmit the first uplink data or retransmit the second uplink data.

Optionally, the resource configuration information further includes at least one of simultaneous transmission information, duration, or priority threshold information.

In this embodiment of the present invention, the period included in the resource configuration information may be greater than 0 milliseconds and less than 10 milliseconds, for example, 1 millisecond or 2 milliseconds. With a shorter period configured, a resource scheduling period becomes shorter. This increases available resources within a same time compared with a period of 10 ms, thereby effectively reducing a data transmission delay.

Optionally, when the resource configuration information includes multiple periods, the base station may switch between the multiple periods by using media access control (Media Access Control, MAC) layer signaling or physical layer signaling, and notify the user equipment of a currently used period.

The priority is used to: if a conflict occurs when the user equipment transmits the first uplink data and retransmits the second uplink data according to the resource configuration information, indicate the priority level for transmitting the first uplink data or retransmitting the second uplink data. The priority is preconfigured by the user equipment, or the priority is further included in the resource configuration information. The priority may be set in a protocol.

The simultaneous transmission information is used to instruct the user equipment to simultaneously transmit the first uplink data and retransmit the second uplink data according to different radio resources. That is, after a time conflict occurs between the first uplink data and the second uplink data, the first uplink data and the second uplink data may be simultaneously transmitted by using different radio resources. For example, the first uplink data is transmitted according to a radio resource periodically allocated to the user equipment, and the second uplink data is retransmitted according to another allocated radio resource; or the second uplink data is retransmitted according to a radio resource periodically allocated to the user equipment, and the first uplink data is transmitted according to another allocated radio resource. The another radio resource is a radio resource different from the radio resource periodically allocated to the user equipment.

It should be noted that, further, optionally, when multiple periods are configured, each period may be configured with a different priority or different simultaneous transmission information, to transmit the first uplink data and retransmit the second uplink data. Alternatively, each period may be configured with a same priority or same simultaneous transmission information, to transmit the first uplink data and retransmit the second uplink data.

The duration is a time period for which the user equipment transmits the first uplink data or retransmits the second uplink data to the base station according to the resource configuration information. For example, the duration may be 100 milliseconds or 10 times the period included in the resource configuration information.

The priority threshold information is used to indicate a condition of applying the priority. For example, when the period is less than a preset value, the second uplink data may be preferentially retransmitted; or when the period is greater than a preset value, the first uplink data may be preferentially transmitted.

Step 102. The base station sends the resource configuration information to user equipment.

In this step, the resource configuration information may be transmitted by using radio resource control (Radio Resource Control, RRC) signaling. After successfully configuring the resource configuration information, the user equipment may send a configuration completion message to the base station.

Step 103. The user equipment receives the resource configuration information sent by the base station.

For the resource configuration information and related content, reference may be made to the foregoing descriptions. Details are not described herein.

Step 104. The base station sends, to the user equipment, a first activation command at a media access control layer or physical layer.

Step 105. The user equipment receives the first activation command that is sent by the base station at the media access control layer or physical layer.

When the first activation command includes a radio resource, the first activation command is used to activate the radio resource indicated in the activation command. When the resource configuration information includes a radio resource, the first activation command is used to activate the radio resource indicated in the resource configuration information.

It should be noted that, the first activation command or a dynamic scheduling command may further include indication information of the radio resource. The indication information of the radio resource is used to indicate that the radio resource is used to transmit the first uplink data and retransmit the second uplink data, indicate a modulation and coding manner, or the like.

Further, optionally, the radio resource for retransmitting the second uplink data may be dynamically indicated by the base station, or the radio resource included in the resource configuration information, the radio resource included in the activation command, or the radio resource included in the dynamic scheduling command is used. Alternatively, the radio resource for transmitting the first uplink data may be indicated by the dynamic scheduling command, or the radio resource included in the resource configuration information or the radio resource included in the activation command is used.

Further, optionally, different hybrid automatic repeat request (Hybrid Automatic Repeatre Quest, HARQ) processes or different sub-processes of a same HARQ process may be used for the first uplink data and the second uplink data.

It should be noted that, step 104 and step 105 are optional. It may be understood that, the user equipment may receive, according to the resource configuration information, the first downlink data sent by the base station or the second downlink data retransmitted by the base station. It may be understood that, the first activation command may also be used to receive downlink data.

Step 106. The user equipment transmits first uplink data or retransmits second uplink data to the base station according to the resource configuration information.

The user equipment determines that a time for retransmitting the second uplink data is the same as a time that is for transmitting the first uplink data and that is determined according to the period; and transmits the first uplink data or retransmits the second uplink data according to the priority. The user equipment transmits the first uplink data or retransmits the second uplink data to the base station by using the radio resource included in the resource configuration information or the radio resource included in the activation command.

Specifically, after sending the data, if the user equipment receives a negative acknowledgement, it is determined that the data is not successfully sent, and the data needs to be sent again. Generally, the UE performs retransmission in a hybrid automatic repeat request (HARQ, Hybrid Automatic Retransmission reQuest) manner. For example, the user equipment sends the data at time n; if the data is not successfully sent, the UE retransmits the data at time n+8. If a radio resource is configured for time n+8, it is determined that the time for retransmitting the second uplink data is the same as the time that is for transmitting the first uplink data and that is determined according to the period.

According to the data sending method provided in this embodiment of the present invention, when the user equipment determines, according to the resource configuration information sent by the base station, that the time for retransmitting the second uplink data is the same as the time that is for transmitting the first uplink data and that is determined according to the period, the user equipment transmits the first uplink data or retransmits the second uplink data according to the priority level that is indicated by the priority and that is for transmitting the first uplink data or retransmitting the second uplink data. The period that is included in the resource configuration information and that is used by the base station to allocate the radio resource to the user equipment is less than 10 ms, thereby resolving a conflict in transmitting the first uplink data or retransmitting the second uplink data, reducing a delay in transmitting the first uplink data or retransmitting the second uplink data, and ensuring high reliability for transmitting the first uplink data or retransmitting the second uplink data.

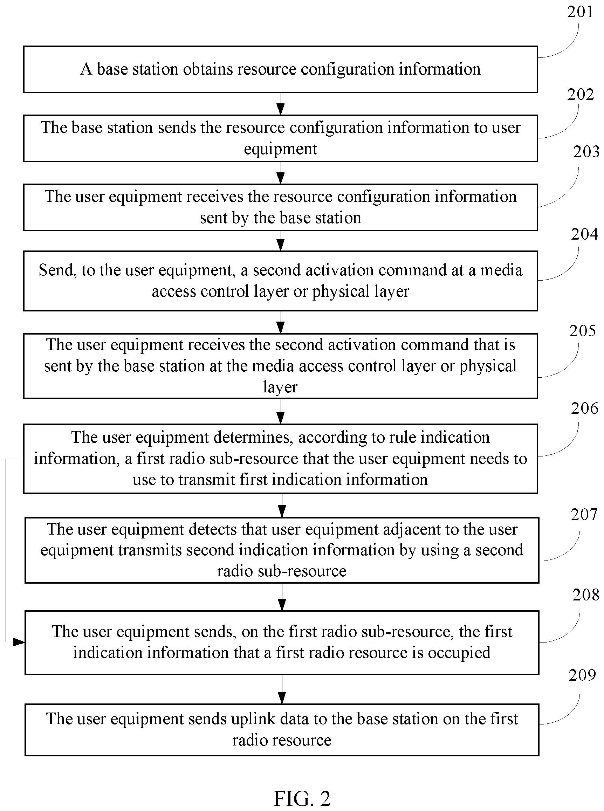

An embodiment of the present invention provides a data sending method. As shown in FIG. 2, the method includes the following steps.

Step 201. A base station obtains resource configuration information.

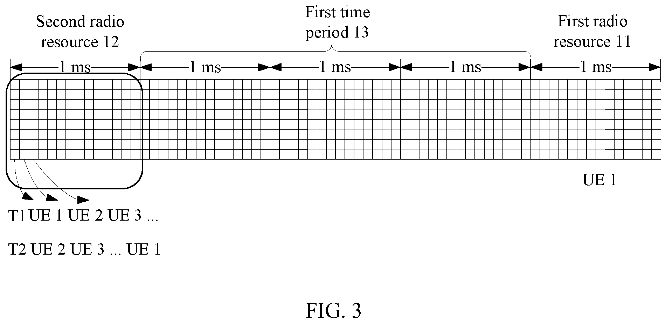

The resource configuration information includes a first radio resource and a second radio resource, for example, as shown in FIG. 3, a first radio resource 11 and a second radio resource 12.

The first radio resource is used to transmit uplink data by at least two user equipments, where the at least two user equipments include the user equipment, for example, a physical uplink shared channel (Physical Uplink Shared Channel, PUSCH). The first radio resource may be allocated to multiple user equipments for use. The first radio resource may be periodically or dynamically allocated by the base station. This is not limited in this embodiment of the present invention.

The second radio resource includes at least two radio sub-resources. Each of the at least two radio sub-resources is corresponding to one of the at least two user equipments. The radio sub-resource is used to send, by the user equipment on the radio sub-resource, indication information that the first radio resource is occupied to transmit the uplink data. A radio sub-resource in the second radio resource is cooperatively used among multiple user equipments. The second radio resource is corresponding to the first radio resource. That is, the user equipment may determine the used first radio resource according to the second radio resource, or the user equipment may determine the used second radio resource according to the first radio resource. The first indication information or the second indication information may be pilot information, preamble information, a reference signal, or the like. This is not limited in this embodiment of the present invention.

Multiple radio sub-resources included in the second radio resource are located at different time. For example, each radio sub-resource is located at a different orthogonal frequency division multiplexing (Orthogonal Frequency Division Multiplexing, OFDM) symbol, transmission time interval (Transmission Time Interval, TTI), N ms, or the like. Each radio sub-resource may be allocated to one user equipment for use. Alternatively, the multiple radio sub-resources are located at different frequency, or the multiple radio sub-resources are located in different code domains, or are different in at least one of time, frequency, or code domains. This is not limited in this embodiment of the present invention. It may be understood that, generally, the radio sub-resource is far less than the first radio resource. The radio sub-resource is used to transmit only a small amount of information, such as information of several bits or even one bit, or only energy information.

The resource configuration information further includes at least one of a first time period, rule indication information, or priority indication information.

The first time period is a time interval between the first radio resource and the second radio resource. The first time period may be N milliseconds, M OFDM symbols, K TTIs, or the like, where N, M, and K are greater than 0. This is not limited in this embodiment of the present invention. As shown in FIG. 3, there is a first time period 13 between the first radio resource 11 and the second radio resource 12. Alternatively, the base station configures the first time period in another message or specifies the first time period in a protocol. This does not need to be limited in the present invention.

The rule indication information is used to indicate the radio sub-resource used by the user equipment.

The rule indication information may be related to an identity of the user equipment and/or time. Specifically, the rule indication information may be information about a rule that different UEs use a radio sub-resource at different time. It is assumed that the second radio resource includes three radio sub-resources, which are allocated to three UEs for use. UE 1 uses a first radio sub-resource at time 1, uses a second radio sub-resource at time 2, and uses a third radio sub-resource at time 3. UE 2 uses the second radio sub-resource at time 1, uses the third radio sub-resource at time 2, and uses the first radio sub-resource at time 3. UE 3 uses the third radio sub-resource at time 1, uses the first radio sub-resource at time 2, and uses the second radio sub-resource at time 3. Alternatively, UE 1 always uses the first radio sub-resource, UE 2 always uses the second radio sub-resource, UE 3 always uses the third radio sub-resource, and the like. This is not limited in this embodiment of the present invention. The base station may also notify the user equipment of a start time at which the user equipment uses the first radio sub-resource, and/or an interval time period, and/or a resource interval between two times of using the first radio sub-resource, and the like. Alternatively, the rule may also be specified in a protocol.

The priority indication information is used to indicate priority levels of the first radio sub-resource used by the user equipment and the second radio sub-resource used by user equipment adjacent to the user equipment.

Specifically, when a priority of the second radio sub-resource used by the user equipment adjacent to the user equipment is higher than a priority of the first radio sub-resource used by the user equipment, and the user equipment detects that the user equipment adjacent to the user equipment sends the second indication information by using the second radio sub-resource, the user equipment does not use the first radio resource to transmit the first uplink data or retransmit the second uplink data, regardless of whether the user equipment uses the first radio sub-resource to transmit the first indication information.

Alternatively, when the user equipment does not obtain, by means of detection, that the user equipment adjacent to the user equipment sends the second indication information by using the second radio sub-resource, the user equipment uses the first radio resource to transmit the first uplink data or retransmit the second uplink data after using the first radio sub-resource to transmit the first indication information.

Alternatively, when the user equipment does not obtain, by means of detection, that the user equipment adjacent to the user equipment sends the second indication information by using the second radio sub-resource whose priority is higher than the priority of the first radio sub-resource, the user equipment uses the first radio resource to transmit the first uplink data or retransmit the second uplink data after using the first radio sub-resource to transmit the first indication information.

Alternatively, if the priority of the first radio sub-resource used by the user equipment is the highest, the user equipment uses the first radio resource to transmit the first uplink data or retransmit the second uplink data after using the first radio sub-resource to transmit the first indication information.

Step 202. The base station sends the resource configuration information to user equipment.

For an implementation of this step, reference may be made to the foregoing descriptions. Details are not described herein.

Step 203. The user equipment receives the resource configuration information sent by the base station.

For the resource configuration information and related content, reference may be made to the foregoing descriptions. Details are not described herein.

For functions of the first radio resource, reference may be made to the foregoing descriptions. The first radio resource may be allocated to the at least two user equipments for use. However, the first radio resource may be used only by one user equipment at a same time. Therefore, the first radio resource is used to cooperatively transmit, by the at least two user equipments, the uplink data. The cooperative manner is implemented by sending, by the at least two user equipments on the second radio sub-resource, the indication information that the first radio resource is occupied to transmit the uplink data. The first radio resource may be periodically or dynamically allocated by the base station. This is not limited in this embodiment of the present invention.

The second radio resource includes the at least two radio sub-resources. Each of the at least two radio sub-resources is corresponding to one of the at least two user equipments. The radio sub-resource is used to send, by the user equipment corresponding to the radio sub-resource and on the radio sub-resource, the indication information that the first radio resource is occupied to transmit the uplink data. In this way, the at least two user equipments implement cooperation by using respective corresponding radio sub-resources. Specifically, the at least two user equipments may send, on the respective corresponding radio sub-resources, the indication information that the first radio resource is occupied to transmit the uplink data, and may also detect a radio sub-resource corresponding to another user equipment in the at least two user equipments. When user equipment detects that another user equipment sends, on a corresponding radio sub-resource, the indication information that the first radio resource is occupied to transmit the uplink data, the user equipment does not transmit the uplink data on the first radio resource. When user equipment does not obtain, by means of detection, that another user equipment sends, on a corresponding radio sub-resource, the indication information that the first radio resource is occupied to transmit the uplink data, the user equipment sends, on a radio sub-resource corresponding to the user equipment, the indication information that the first radio resource is occupied to transmit the uplink data, so as to occupy the first radio resource.

Further, the following introduces optional implementation solutions of the cooperative manner.

A radio sub-resource in the second radio resource is cooperatively used among multiple user equipments. The second radio resource is corresponding to the first radio resource. That is, the user equipment may determine the used first radio resource according to the second radio resource, or the user equipment may determine the used second radio resource according to the first radio resource. The first indication information or the second indication information may be pilot information, preamble information, a reference signal, or the like. This is not limited in this embodiment of the present invention.

Multiple radio sub-resources included in the second radio resource are located at different time. For example, each radio sub-resource is located at a different OFDM symbol, TTI, N ms, or the like. Each radio sub-resource may be allocated to one user equipment for use. Alternatively, the multiple radio sub-resources are located at different frequency, or the multiple radio sub-resources are located in different code domains, or are different in at least one of time, frequency, or code domains. This is not limited in this embodiment of the present invention. It may be understood that, generally, the radio sub-resource is far less than the first radio resource. The radio sub-resource is used to transmit only a small amount of information, such as information of several bits or even one bit, or only energy information.

The resource configuration information further includes at least one of a first time period, rule indication information, or priority indication information.

The first time period is a time interval between the first radio resource and the second radio resource. The first time period may be N milliseconds, M OFDM symbols, K TTIs, or the like, where N, M, and K are greater than 0. This is not limited in this embodiment of the present invention. As shown in FIG. 3, there is the first time period 13 between the first radio resource 11 and the second radio resource 12. Alternatively, the base station configures the first time period in another message or specifies the first time period in a protocol. This does not need to be limited in the present invention.

The rule indication information is used to indicate the radio sub-resource used by the user equipment.

The rule indication information may be related to an identity of the user equipment and/or time. Specifically, the rule indication information may be information about a rule that different UEs use a radio sub-resource at different time. It is assumed that the second radio resource includes three radio sub-resources, which are allocated to three UEs for use. UE 1 uses a first radio sub-resource at time 1, uses a second radio sub-resource at time 2, and uses a third radio sub-resource at time 3. UE 2 uses the second radio sub-resource at time 1, uses the third radio sub-resource at time 2, and uses the first radio sub-resource at time 3. UE 3 uses the third radio sub-resource at time 1, uses the first radio sub-resource at time 2, and uses the second radio sub-resource at time 3. Alternatively, UE 1 always uses the first radio sub-resource, UE 2 always uses the second radio sub-resource, UE 3 always uses the third radio sub-resource, and the like. This is not limited in this embodiment of the present invention. The base station may also notify the user equipment of a start time at which the user equipment uses the first radio sub-resource, and/or an interval time period, and/or a resource interval between two times of using the first radio sub-resource, and the like. Alternatively, the rule may also be specified in a protocol.

The priority indication information is used to indicate priority levels of the first radio sub-resource used by the user equipment and the second radio sub-resource used by user equipment adjacent to the user equipment.

Specifically, when a priority of the second radio sub-resource used by the user equipment adjacent to the user equipment is higher than a priority of the first radio sub-resource used by the user equipment, and the user equipment detects that the user equipment adjacent to the user equipment sends the second indication information by using the second radio sub-resource, the user equipment does not use the first radio resource to transmit the first uplink data or retransmit the second uplink data, regardless of whether the user equipment uses the first radio sub-resource to transmit the first indication information.

Alternatively, when the user equipment does not obtain, by means of detection, that the user equipment adjacent to the user equipment sends the second indication information by using the second radio sub-resource, the user equipment uses the first radio resource to transmit the first uplink data or retransmit the second uplink data after using the first radio sub-resource to transmit the first indication information.

Alternatively, when the user equipment does not obtain, by means of detection, that the user equipment adjacent to the user equipment sends the second indication information by using the second radio sub-resource whose priority is higher than the priority of the first radio sub-resource, the user equipment uses the first radio resource to transmit the first uplink data or retransmit the second uplink data after using the first radio sub-resource to transmit the first indication information.

Alternatively, if the priority of the first radio sub-resource used by the user equipment is the highest, the user equipment uses the first radio resource to transmit the first uplink data or retransmit the second uplink data after using the first radio sub-resource to transmit the first indication information.

It may be understood that, the first indication information is different from or the same as the second indication information.

Step 204. Send, to the user equipment, a second activation command at a media access control layer or physical layer.

Step 205. The user equipment receives the second activation command that is sent by the base station at the media access control layer or physical layer.

The second activation command is used to activate the first radio resource and the second radio resource that are indicated in the resource configuration information.

It should be noted that, the second activation command may further include indication information of the radio resource. The indication information of the radio resource is used to indicate that the radio resource is used to transmit the first uplink data and retransmit the second uplink data, indicate a modulation and coding manner, or the like.

Further, optionally, the radio resource for retransmitting the second uplink data may be dynamically indicated by the base station, or the radio resource included in the resource configuration information or the radio resource included in the second activation command is used. Alternatively, the radio resource for transmitting the first uplink data may be dynamically indicated by the base station, or the radio resource included in the resource configuration information or the radio resource included in the activation command is used.

Further, optionally, different HARQ processes or different sub-processes of a same HARQ process may be used for the first uplink data and the second uplink data.

It should be noted that, step 204 and step 205 are optional.

Step 206. The user equipment determines, according to rule indication information, a first radio sub-resource that the user equipment needs to use to transmit the first indication information, and performs step 207 or step 208.

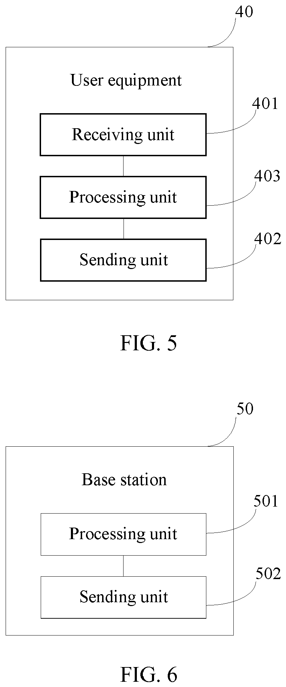

For example, as shown in FIG. 5, it is assumed that UE 1 uses a first radio sub-resource at time 1 according to the rule indication information, UE 2 uses a second radio sub-resource at time 1 according to the rule indication information, and UE 3 uses a third radio sub-resource at time 1 according to the rule indication information.

Step 207. The user equipment detects that user equipment adjacent to the user equipment transmits the second indication information by using a second radio sub-resource.

Step 208. The user equipment sends, on the first radio sub-resource, the first indication information that the first radio resource is occupied.

When the user equipment does not obtain, by means of detection, that the user equipment adjacent to the user equipment transmits the second indication information by using the second radio sub-resource, UE 1 sends, on the first radio sub-resource, the first indication information that the first radio resource is occupied. It may be understood that, if the priority of the first radio sub-resource is the highest and the first radio sub-resource is the earliest in time, the UE may not detect that the user equipment adjacent to the user equipment transmits the second indication information by using the second radio sub-resource. This is not limited in this embodiment of the present invention.

The user equipment determines, according to the priority indication information, that it is unnecessary to detect that the user equipment adjacent to the user equipment transmits the second indication information by using the second radio sub-resource; and the user equipment sends, on the first radio sub-resource, the first indication information that the first radio resource is occupied.

In this way, the user equipment and the user equipment adjacent to the user equipment cooperatively use a radio sub-resource in the second radio resource, thereby reducing a collision probability of user equipments regarding the first radio resource, improving utilization of the first radio resource, improving data transmission reliability, and reducing a data transmission delay.

It should be noted that, the first indication information may be different from or may be the same as the second indication information.

Particularly, the base station allocates the first radio resource to the user equipment according to received first indication information and/or second indication information of different user equipments, and another user equipment uses another radio resource. Specifically, a method of allocating the first radio resource by the base station includes: allocating, by the base station, a dedicated physical uplink shared channel resource to at least one user equipment that sends first indication information or second indication information. If the user equipment that sends first indication information or second indication information does not receive the dedicated physical uplink shared channel resource, the user equipment may use the first radio resource to transmit the first uplink data. Alternatively, the base station may indicate user equipment that uses the first radio resource.

The base station may instruct, by using a notification message, the user equipment to use the first radio resource or the dedicated physical uplink shared channel resource. The notification message may be a physical layer message, or may be a media access control layer message. This is not limited in this embodiment of the present invention. The physical layer message may be a physical downlink control channel (Physical Downlink Control Channel, PDCCH), a physical hybrid automatic repeat request indicator channel (Physical Hybrid ARQ Indicator Channel, PHICH), or another physical channel. The physical layer message may include UE information, such as UE identity information. Specifically, an UE identity may be used to mask the physical layer message, or may be carried in the physical layer message. The UE identity information may be cell radio network temporary identities (Cell- Radio Network Temporary Identity, C-RNTI) of multiple UEs that use the first radio resource, or index numbers, in a group, of multiple UEs that use the first radio resource. Compared with a length of the C-RNTI, a length of the index number is much more less. For example, a current length of the C-RNTI is 16 bits; if there are 16 UEs in a group, the UEs can be distinguished only by using 4 bits. Therefore, signaling overheads may be greatly reduced.

Step 209. The user equipment sends, on the first radio resource, uplink data to the base station.

When the user equipment does not obtain, by means of detection, that the user equipment adjacent to the user equipment transmits the second indication information by using the second radio sub-resource, the user equipment sends the uplink data to the base station on the first radio resource.

Alternatively, when the user equipment does not obtain, by means of detection, that the user equipment adjacent to the user equipment transmits the second indication information by using the second radio sub-resource whose priority, indicated by the priority indication information, is higher than a priority of the first radio sub-resource, the user equipment sends the uplink data to the base station on the first radio resource.

Alternatively, the user equipment indicates, by using the priority indication information, that the priority of the first radio sub-resource is the highest; and the user equipment sends the uplink data to the base station on the first radio resource.

According to the data sending method in this embodiment of the present invention, the user equipment sends, on the first radio sub-resource, the first indication information that the first radio resource is occupied, so that the user equipment can send the uplink data to the base station on the first radio resource. Therefore, the first uplink data is transmitted or the second uplink data is retransmitted by using the first radio resource that is in the resource configuration information and that is corresponding to the second radio resource. This resolves a conflict in transmitting the first uplink data or retransmitting the second uplink data, reduces a delay in transmitting the first uplink data or retransmitting the second uplink data, and ensures high reliability for transmitting the first uplink data or retransmitting the second uplink data.

It should be noted that, in the embodiments of the present invention, the first uplink data and the second uplink data may be user data, signaling, media access control control elements (Media Access Control Control Element, MAC CE), or the like. This is not specifically limited in the present invention. In the embodiments of the present invention, the resource configuration information may further include a period of a radio resource. The radio resource is allocated by the base station to the user equipment. The period is less than 10 ms.

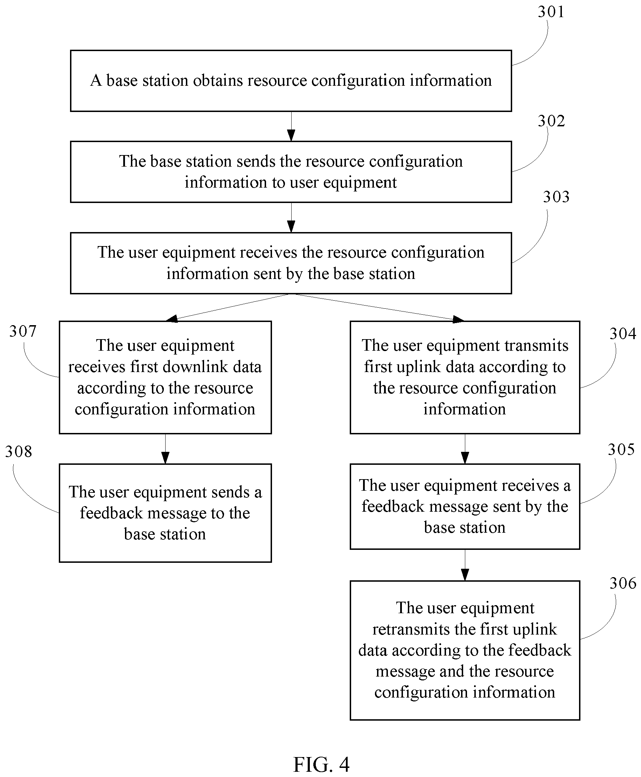

An embodiment of the present invention provides a data sending method. As shown in FIG. 4, the method includes the following steps.

Step 301. A base station obtains resource configuration information.

The resource configuration information includes a quantity of simultaneous HARQ transmission.

Specifically, the quantity of simultaneous HARQ transmission may be indicated as a maximum quantity of simultaneous HARQ transmission, or may be indicated as a minimum quantity of simultaneous HARQ transmission, or may be indicated as a maximum quantity of simultaneous HARQ transmission and a minimum quantity of simultaneous HARQ transmission, or may be indicated as a specific quantity of simultaneous HARQ transmission. This is not limited in this embodiment of the present invention.

Optionally, the resource configuration information further includes a HARQ process quantity and/or HARQ process number. Specifically, the HARQ process quantity and/or HARQ process number may be associated with the quantity of simultaneous HARQ transmission. For example, one HARQ process is used to perform multiple times of HARQ transmission, or each process is corresponding to one HARQ transmission.

Optionally, the resource configuration information further includes indication information of cross-carrier simultaneous HARQ transmission. The indication information of cross-carrier simultaneous HARQ transmission is used to indicate whether UE performs cross-carrier simultaneous HARQ transmission, indicate carriers on which cross-carrier simultaneous HARQ transmission is performed, or the like. It may be understood that, specific content may be: indicating whether to perform cross-carrier simultaneous HARQ transmission, indicating carriers on which cross-carrier simultaneous HARQ transmission is performed, or the like.

When cross-carrier simultaneous HARQ transmission is allowed, multiple carriers may be authorized spectrum carriers, unauthorized spectrum carriers, or a combination of authorized spectrum carriers and unauthorized spectrum carriers. This is not limited in this embodiment of the present invention.

The resource configuration information further includes a maximum quantity of HARQ transmission times.

The resource configuration information further includes HARQ feedback resource indication information, such as uplink feedback resource indication information and/or downlink feedback resource information.

The resource configuration information may be further used for uplink HARQ transmission or downlink HARQ transmission.

The resource configuration information may be transmitted by using an RRC message, MAC layer signaling, or physical layer signaling. This is not limited in this embodiment of the present invention.

Step 302. The base station sends the resource configuration information to user equipment.

Step 303. The user equipment receives the resource configuration information sent by the base station.

For the resource configuration information and related content, reference may be made to the foregoing descriptions.

Step 304. The user equipment transmits first uplink data according to the resource configuration information.

Specifically, after receiving uplink authorization sent by the base station, the user equipment simultaneously performs multiple times of HARQ transmission according to the resource configuration information, for example, maps the first uplink data to multiple different physical resources (including time, frequency domains, code domains, and the like) for parallel transmission.

A radio resource used by the user equipment may be indicated by a command sent by a base station (eNB). For example, the command sent by the eNB carries information about all radio resources used by the multiple times of HARQ transmission. For example, a radio resource of first HARQ transmission carried in the command is radio resource 1, or a radio resource of first HARQ transmission carried in the command is radio resource 2. Alternatively, some radio resources are indicated by the command sent by the eNB, and another radio resource is indicated by the resource configuration information. For example, a radio resource of first HARQ transmission carried in the command is radio resource 1, and the resource configuration information indicates that a radio resource of second HARQ transmission is a radio resource adjacent to radio resource 1. Alternatively, some radio resources are indicated by the command sent by the eNB, and another radio resource is indicated by a protocol rule. For example, a radio resource of first HARQ transmission carried in the command is radio resource 1, and a protocol indicates that a radio resource of second HARQ transmission is a radio resource adjacent to radio resource 1. Then, the UE may determine all possible radio resources according to the command and the rule. This is not limited in this embodiment of the present invention.

After step 304, the method may further include step 305 and step 306.

Step 305. The user equipment receives a feedback message sent by the base station.

A resource used by the feedback message may be determined according to one or more resources of multiple resources used by the multiple times of HARQ transmission. Specific information of using one or more feedback messages may be specified in a protocol, or may be configured by using the resource configuration information in step 301. This is not limited in this embodiment of the present invention. Particularly, using multiple feedback messages also improves feedback reliability.

Step 306. The user equipment retransmits the first uplink data according to the feedback message and the resource configuration information.

After step 303, the method may further include step 307 and step 308.

Step 307. The user equipment receives first downlink data according to the resource configuration information.

Specifically, the user equipment may receive the first downlink data according to a downlink assignment (DL Assignment) command and resource configuration information that are sent by the eNB. Multiple times of HARQ transmission may be performed simultaneously, such as parallel transmission performed on multiple different physical resources (including time, frequency domains, code domains, and the like). Further, multiple pieces of downlink data that is transmitted in parallel may be further combined for decoding.

A radio resource used by the user equipment may be indicated by a command sent by a base station (eNB). For example, the command sent by the eNB carries information about all radio resources used by the multiple times of HARQ transmission. For example, a radio resource of first HARQ transmission carried in the command is radio resource 1, or a radio resource of first HARQ transmission carried in the command is radio resource 2. Alternatively, some radio resources are indicated by the command sent by the eNB, and another radio resource is indicated by the resource configuration information. For example, a radio resource of first HARQ transmission carried in the command is radio resource 1, and the resource configuration information indicates that a radio resource of second HARQ transmission is a radio resource adjacent to radio resource 1. Alternatively, some radio resources are indicated by the command sent by the eNB, and another radio resource is indicated by a protocol rule. For example, a radio resource of first HARQ transmission carried in the command is radio resource 1, and a protocol indicates that a radio resource of second HARQ transmission is a radio resource adjacent to radio resource 1. Then, the UE may determine all possible radio resources according to the command and the rule. This is not limited in this embodiment of the present invention.

Step 308. The user equipment sends a feedback message to the base station.

A resource used by the feedback message may be determined according to one or more resources of the multiple resources used by the multiple times of HARQ transmission; and/or determined according to the command, for example, according to a resource for transmitting the command or an indication in the command; and/or determined according to information in the HARQ configuration parameter; and the like. This is not limited in this embodiment of the present invention.

Specific information of using one or more feedback messages may be specified in a protocol, or may be configured by using the HARQ configuration parameter in step 501. This is not limited in this embodiment of the present invention.

Using multiple feedback resources also improves feedback reliability.

If the user equipment successfully receives the first downlink data, the user equipment transfers the first downlink data to a higher layer, and feeds back a positive acknowledgment to the eNB.

If the user equipment fails to receive the first downlink data, the user equipment feeds back a negative acknowledgment to the eNB. Further, retransmission is performed to receive the first downlink data.

It should be noted that, the data sending method in this embodiment of the present invention applies to various scenarios such as single-carrier, carrier aggregation, dual connectivity, 32-carrier aggregation, and also applies to scenarios such as higher bandwidth, aggregation of more carriers, and shorter transmission time interval.

According to the data sending method in this embodiment of the present invention, the base station first obtains the resource configuration information. The user equipment receives the resource configuration information sent by the base station, and transmits the first uplink data according to the resource configuration information. In comparison with the prior art, the quantity of simultaneous HARQ transmission is included in the second radio resource in the resource configuration information, thereby reducing a delay in transmitting the first uplink data and ensuring high reliability for transmitting the first uplink data or retransmitting the second uplink data.

An embodiment of the present invention provides user equipment 40. As shown in FIG. 5, the user equipment 40 includes:
a receiving unit 401, configured to receive resource configuration information sent by a base station;
a sending unit 402, configured to send, under control of a processing unit, uplink data to the base station; and
the processing unit 403, configured to control the sending unit to send the uplink data to the base station according to the resource configuration information.

Optionally, the resource configuration information includes a period of a radio resource, where the radio resource is allocated by the base station to the user equipment.

The processing unit 403 is further configured to:
determine that a time for retransmitting second uplink data is the same as a time that is for transmitting first uplink data and that is determined according to the period.

The sending unit 402 is specifically configured to:
when the processing unit 403 determines that the time for retransmitting the second uplink data is the same as the time that is for transmitting the first uplink data and that is determined according to the period, transmit the first uplink data or retransmit the second uplink data according to a priority, where the priority is used to indicate a priority level for transmitting the first uplink data or retransmitting the second uplink data.

The priority is preconfigured by the user equipment, or the priority is further included in the resource configuration information.

In this way, when the user equipment determines, according to the resource configuration information sent by the base station, that the time for retransmitting the second uplink data is the same as the time that is for transmitting the first uplink data and that is determined according to the period, the user equipment transmits the first uplink data or retransmits the second uplink data according to the priority level that is indicated by the priority and that is for transmitting the first uplink data or retransmitting the second uplink data, thereby resolving a conflict in transmitting the first uplink data or retransmitting the second uplink data, reducing a delay in transmitting the first uplink data or retransmitting the second uplink data, and ensuring high reliability for transmitting the first uplink data or retransmitting the second uplink data.

Further, optionally, the resource configuration information further includes at least one of simultaneous transmission information, duration, or priority threshold information, where the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

The receiving unit 401 is further configured to:
receive a first activation command that is sent by the base station at a media access control layer or physical layer.

When the first activation command includes a radio resource, the first activation command is used to activate the radio resource indicated in the first activation command.

When the resource configuration information includes a radio resource, the first activation command is used to activate the radio resource indicated in the resource configuration information.

Optionally, the resource configuration information includes information about a first radio resource and information about a second radio resource. The first radio resource is used to transmit uplink data by at least two user equipments, and the at least two user equipments include the user equipment. The second radio resource includes at least two radio sub-resources. Each of the at least two radio sub-resources is corresponding to one of the at least two user equipments. The radio sub-resource is used to send, by the user equipment on the radio sub-resource, indication information that the uplink data is transmitted on the first radio resource.

The sending unit 402 is specifically configured to:
send, on a first radio sub-resource, first indication information that the first radio resource is occupied, where the first radio sub-resource is a radio sub-resource that is of the at least two radio sub-resources and that is corresponding to the user equipment; and
send the uplink data to the base station on the first radio resource.

In this way, the user equipment sends, on the first radio sub-resource, the first indication information that the first radio resource is occupied, so that the user equipment can send the uplink data to the base station on the first radio resource. Therefore, the first uplink data is transmitted or the second uplink data is retransmitted by using the first radio resource that is in the resource configuration information and that is corresponding to the second radio resource. This resolves a conflict in transmitting the first uplink data or retransmitting the second uplink data, reduces a delay in transmitting the first uplink data or retransmitting the second uplink data, and ensures high reliability for transmitting the first uplink data or retransmitting the second uplink data.

The receiving unit 401 is further configured to:
receive a second activation command that is sent by the base station at the media access control layer or physical layer, where the second activation command is used to activate the first radio resource and the second radio resource that are indicated in the resource configuration information.

Further, optionally, the resource configuration information further includes at least one of a first time period, rule indication information, or priority indication information. The first time period is a time interval between the first radio resource and the second radio resource. The rule indication information is used to indicate the radio sub-resource obtained and used by the user equipment. The priority indication information is used to indicate priority levels of the radio sub-resource used by the user equipment and a radio sub-resource used by user equipment adjacent to the user equipment.

The processing unit 403 is configured to determine, according to the rule indication information, the first radio sub-resource that the user equipment needs to use to transmit the first indication information.

The processing unit 403 is further configured to:
detect that the user equipment adjacent to the user equipment transmits second indication information by using a second radio sub-resource.

The sending unit 402 is specifically configured to:
when the user equipment does not obtain, by means of detection, that the user equipment adjacent to the user equipment transmits the second indication information by using the second radio sub-resource, send, on the first radio sub-resource, the first indication information that the first radio resource is occupied.

The sending unit 402 is specifically configured to:
when the user equipment does not obtain, by means of detection, that the user equipment adjacent to the user equipment transmits the second indication information by using the second radio sub-resource, send the uplink data to the base station on the first radio resource; or
when the user equipment does not obtain, by means of detection, that the user equipment adjacent to the user equipment transmits the second indication information by using the second radio sub-resource whose priority, indicated by the priority indication information, is higher than a priority of the first radio sub-resource, send the uplink data to the base station on the first radio resource.

The sending unit 402 is specifically configured to:
determine, according to the priority indication information, that it is unnecessary to detect that the user equipment adjacent to the user equipment transmits the second indication information by using the second radio sub-resource; and send, on the first radio sub-resource, the first indication information that the first radio resource is occupied.

The sending unit 402 is specifically configured to:
indicate, by using the priority indication information, that the priority of the first radio sub-resource is the highest; and send the uplink data to the base station on the first radio resource.

It should be noted that, the resource configuration information includes a period of a radio resource. The radio resource is allocated by the base station to the user equipment. The period is less than 10 ms.

An embodiment of the present invention provides a base station 50. As shown in FIG. 6, the base station 50 includes:
a processing unit 501, configured to obtain resource configuration information; and
a sending unit 502, configured to send the resource configuration information to user equipment.

Optionally, the resource configuration information includes a period of a radio resource, where the period is used by the user equipment to determine a time for transmitting first uplink data, and the radio resource is allocated by the base station to the user equipment; and the resource configuration information further includes a priority, where the priority is used to indicate a priority level for the user equipment to transmit the first uplink data or retransmit the second uplink data.

In this way, the period that is included in the resource configuration information and that is used by the base station to allocate the radio resource to the user equipment is less than 10 ms, thereby resolving a conflict in transmitting the first uplink data or retransmitting the second uplink data, reducing a delay in transmitting the first uplink data or retransmitting the second uplink data, and ensuring high reliability for transmitting the first uplink data or retransmitting the second uplink data.

Optionally, the resource configuration information further includes at least one of simultaneous transmission information, duration, or priority threshold information, where the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

The sending unit 502 is further configured to:
send, to the user equipment, a first activation command at a media access control layer or physical layer.

When the first activation command includes a radio resource, the first activation command is used to activate the radio resource indicated in the first activation command.

When the resource configuration information includes a radio resource, the first activation command is used to activate the radio resource indicated in the resource configuration information.

Optionally, the resource configuration information includes information about a first radio resource and information about a second radio resource. The first radio resource is used to transmit uplink data by at least two user equipments, and the at least two user equipments include the user equipment. The second radio resource includes at least two radio sub-resources. Each of the at least two radio sub-resources is corresponding to one of the at least two user equipments. The radio sub-resource is used to send, by the user equipment on the radio sub-resource, indication information that the uplink data is transmitted on the first radio resource.

In this way, the base station sends the first radio resource and the second radio resource to the user equipment, and the user equipment sends, on the first radio sub-resource, the first indication information that the first radio resource is occupied, so that the user equipment can send the uplink data to the base station on the first radio resource. Therefore, the first uplink data is transmitted or the second uplink data is retransmitted by using the first radio resource that is in the resource configuration information and that is corresponding to the second radio resource. This resolves a conflict in transmitting the first uplink data or retransmitting the second uplink data, reduces a delay in transmitting the first uplink data or retransmitting the second uplink data, and ensures high reliability for transmitting the first uplink data or retransmitting the second uplink data.

The sending unit 502 is further configured to:
send, to the user equipment, a second activation command at the media access control layer or physical layer, where the second activation command is used to activate the first radio resource and the second radio resource that are indicated in the resource configuration information.

Optionally, the resource configuration information further includes at least one of a first time period, rule indication information, or priority indication information. The first time period is a time interval between the first radio resource and the second radio resource. The rule indication information is used to indicate the radio sub-resource obtained and used by the user equipment. The priority indication information is used to indicate priority levels of the radio sub-resource used by the user equipment and a radio sub-resource used by user equipment adjacent to the user equipment.

The resource configuration information includes a period of a radio resource. The radio resource is allocated by the base station to the user equipment. The period is less than 10 milliseconds ms.

It should be noted that, the user equipment may further include a receiver, a processor, a memory, and a transmitter. For steps performed by the receiver, reference may be made to the specific steps of the receiving unit of the user equipment. For steps performed by the transmitter, reference may be made to the specific steps of the sending unit of the user equipment. For steps performed by the processor, reference may be made to the specific steps of the processing unit of the user equipment. The memory is configured to store specific processing steps and programs of the processor.

The base station may further include a receiver, a processor, a memory, and a transmitter. For steps performed by the transmitter, reference may be made to the specific steps of the sending unit of the base station. For steps performed by the processor, reference may be made to the specific steps of the processing unit of the base station. The memory is configured to store specific processing steps and programs of the processor. The receiver is configured to receive a message sent by the user equipment.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

In the several embodiments provided in the present application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts shown as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data sending method, comprising:
receiving, by user equipment, resource configuration information sent by a base station; and
sending, by the user equipment, uplink data to the base station according to the resource configuration information.

2. The method according to claim 1, wherein the resource configuration information comprises a period of a radio resource, wherein the radio resource is allocated by the base station to the user equipment; and
the sending, by the user equipment, uplink data to the base station according to the resource configuration information comprises:
determining, by the user equipment, that a time for retransmitting second uplink data is the same as a time that is for transmitting first uplink data and that is determined according to the period; and
transmitting, by the user equipment, the first uplink data or retransmitting, by the user equipment, the second uplink data according to a priority, wherein the priority is used to indicate a priority level for transmitting the first uplink data or retransmitting the second uplink data, wherein
the priority is preconfigured by the user equipment, or the priority is further comprised in the resource configuration information.

3. The method according to claim 2, wherein the resource configuration information further comprises at least one of simultaneous transmission information, duration, or priority threshold information, wherein the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

4. The method according to claim 2 or 3, wherein before the sending, by the user equipment, uplink data to the base station according to the resource configuration information, the method further comprises:
receiving, by the user equipment, a first activation command that is sent by the base station at a media access control layer or physical layer, wherein
when the first activation command comprises a radio resource, the first activation command is used to activate the radio resource indicated in the first activation command;
when the resource configuration information comprises a radio resource, the first activation command is used to activate the radio resource indicated in the resource configuration information.

5. The method according to claim 1, wherein the resource configuration information comprises information about a first radio resource and information about a second radio resource, wherein the first radio resource is used to transmit uplink data by at least two user equipments, and the at least two user equipments comprise the user equipment; the second radio resource comprises at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data; and
the sending, by the user equipment, uplink data to the base station according to the resource configuration information comprises:
sending, by the user equipment on a first radio sub-resource, first indication information that the first radio resource is occupied, wherein the first radio sub-resource is a radio sub-resource that is of the at least two radio sub-resources and that is corresponding to the user equipment; and
sending, by the user equipment, the uplink data to the base station on the first radio resource.

6. The method according to claim 5, wherein the resource configuration information further comprises at least one of a first time period, rule indication information, or priority indication information, wherein the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

7. The method according to claim 6, further comprising:
detecting, by the user equipment, that the user equipment adjacent to the user equipment transmits second indication information by using a second radio sub-resource.

8. The method according to claim 7, wherein the sending, by the user equipment on a first radio sub-resource, first indication information that the first radio resource is occupied comprises:
when the user equipment does not obtain, by means of detection, that the user equipment adjacent to the user equipment transmits the second indication information by using the second radio sub-resource, sending, by the user equipment on the first radio sub-resource, the first indication information that the first radio resource is occupied.

9. The method according to claim 6, wherein the sending, by the user equipment on a first radio sub-resource, first indication information that the first radio resource is occupied comprises:
determining, by the user equipment according to the priority indication information, that it is unnecessary to detect that the user equipment adjacent to the user equipment transmits second indication information by using a second radio sub-resource; and sending, by the user equipment on the first radio sub-resource, the first indication information that the first radio resource is occupied.

10. The method according to any one of claims 1 to 9, wherein the resource configuration information comprises the period of the radio resource, wherein the radio resource is allocated by the base station to the user equipment, and the period is less than 10 milliseconds ms.

11. A data sending method, comprising:
obtaining, by a base station, resource configuration information; and
sending, by the base station, the resource configuration information to user equipment.

12. The method according to claim 11, wherein the resource configuration information comprises a period of a radio resource, wherein the period is used by the user equipment to determine a time for transmitting first uplink data, and the radio resource is allocated by the base station to the user equipment; and the resource configuration information further comprises a priority, wherein the priority is used to indicate a priority level for the user equipment to transmit the first uplink data or retransmit the second uplink data.

13. The method according to claim 12, wherein the resource configuration information further comprises at least one of simultaneous transmission information, duration, or priority threshold information, wherein the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

14. The method according to claim 12 or 13, wherein after the sending, by the base station, the resource configuration information to user equipment, the method further comprises:
sending, by the base station to the user equipment, a first activation command at a media access control layer or physical layer, wherein
when the first activation command comprises a radio resource, the first activation command is used to activate the radio resource indicated in the first activation command;
when the resource configuration information comprises a radio resource, the first activation command is used to activate the radio resource indicated in the resource configuration information.

15. The method according to claim 11, wherein the resource configuration information comprises information about a first radio resource and information about a second radio resource, wherein the first radio resource is used to transmit uplink data by at least two user equipments, and the at least two user equipments comprise the user equipment; the second radio resource comprises at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data.

16. The method according to claim 15, wherein the resource configuration information further comprises at least one of a first time period, rule indication information, or priority indication information, wherein the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

17. The method according to any one of claims 11 to 16, wherein the resource configuration information comprises the period of the radio resource, wherein the radio resource is allocated by the base station to the user equipment, and the period is less than 10 milliseconds ms.

18. User equipment, comprising:
a receiving unit, configured to receive, according to control of a processing unit, resource configuration information sent by a base station;
a sending unit, configured to send uplink data to the base station according to the control of the processing unit and according to the resource configuration information; and
the processing unit, configured to: control the receiving unit to receive the resource configuration information sent by the base station, and control the sending unit to send the uplink data to the base station according to the resource configuration information.

19. The user equipment according to claim 18, wherein the resource configuration information comprises a period of a radio resource, wherein the radio resource is allocated by the base station to the user equipment;
the processing unit is further configured to:
determine that a time for retransmitting second uplink data is the same as a time that is for transmitting first uplink data and that is determined according to the period; and
the sending unit is specifically configured to:
transmit the first uplink data or retransmit the second uplink data according to a priority, wherein the priority is used to indicate a priority level for transmitting the first uplink data or retransmitting the second uplink data, wherein
the priority is preconfigured by the user equipment, or the priority is further comprised in the resource configuration information.

20. The user equipment according to claim 19, wherein the resource configuration information further comprises at least one of simultaneous transmission information, duration, or priority threshold information, wherein the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

21. The user equipment according to claim 19 or 20, wherein the receiving unit is further configured to:
receive a first activation command that is sent by the base station at a media access control layer or physical layer, wherein
when the first activation command comprises a radio resource, the first activation command is used to activate the radio resource indicated in the first activation command;
when the resource configuration information comprises a radio resource, the first activation command is used to activate the radio resource indicated in the resource configuration information.

22. The user equipment according to claim 18, wherein the resource configuration information comprises information about a first radio resource and information about a second radio resource, wherein the first radio resource is used to transmit uplink data by at least two user equipments, and the at least two user equipments comprise the user equipment; the second radio resource comprises at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data; and
the sending unit is specifically configured to:
send, on a first radio sub-resource, first indication information that the first radio resource is occupied, wherein the first radio sub-resource is a radio sub-resource that is of the at least two radio sub-resources and that is corresponding to the user equipment; and
send the uplink data to the base station on the first radio resource.

23. The user equipment according to claim 22, wherein the resource configuration information further comprises at least one of a first time period, rule indication information, or priority indication information, wherein the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

24. The user equipment according to claim 23, wherein the processing unit is further configured to:
detect that the user equipment adjacent to the user equipment transmits second indication information by using a second radio sub-resource.

25. The user equipment according to claim 24, wherein the sending unit is specifically configured to:
when the user equipment does not obtain, by means of detection, that the user equipment adjacent to the user equipment transmits the second indication information by using the second radio sub-resource, send, on the first radio sub-resource, the first indication information that the first radio resource is occupied.

26. The user equipment according to claim 23, wherein the sending unit is specifically configured to:
determine, according to the priority indication information, that it is unnecessary to detect that the user equipment adjacent to the user equipment transmits the second indication information by using the second radio sub-resource; and send, on the first radio sub-resource, the first indication information that the first radio resource is occupied.

27. The user equipment according to any one of claims 18 to 26, wherein the resource configuration information comprises the period of the radio resource, wherein the radio resource is allocated by the base station to the user equipment, and the period is less than 10 milliseconds ms.

28. Abase station, comprising:
a processing unit, configured to obtain resource configuration information; and
a sending unit, configured to send the resource configuration information to user equipment.

29. The base station according to claim 28, wherein the resource configuration information comprises a period of a radio resource, wherein the period is used by the user equipment to determine a time for transmitting first uplink data, and the radio resource is allocated by the base station to the user equipment; and the resource configuration information further comprises a priority, wherein the priority is used to indicate a priority level for the user equipment to transmit the first uplink data or retransmit the second uplink data.

30. The base station according to claim 29, wherein the resource configuration information further comprises at least one of simultaneous transmission information, duration, or priority threshold information, wherein the simultaneous transmission information is used to instruct the user equipment to simultaneously transmit the first uplink data and retransmit the second uplink data according to different radio resources, the duration is a time period for which the user equipment transmits the first uplink data or retransmits the second uplink data to the base station according to the resource configuration information, and the priority threshold information is used to indicate a condition of applying the priority.

31. The base station according to claim 29 or 30, wherein the sending unit is further configured to:
send, to the user equipment, a first activation command at a media access control layer or physical layer, wherein
when the first activation command comprises a radio resource, the first activation command is used to activate the radio resource indicated in the first activation command;
when the resource configuration information comprises a radio resource, the first activation command is used to activate the radio resource indicated in the resource configuration information.

32. The base station according to claim 28, wherein the resource configuration information comprises information about a first radio resource and information about a second radio resource, wherein the first radio resource is used to transmit uplink data by at least two user equipments, and the at least two user equipments comprise the user equipment; the second radio resource comprises at least two radio sub-resources, each of the at least two radio sub-resources is corresponding to one of the at least two user equipments, and the radio sub-resource is used to send, by the user equipment on the radio sub-resource, indication information that the first radio resource is occupied to transmit the uplink data.

33. The base station according to claim 32, wherein the resource configuration information further comprises at least one of a first time period, rule indication information, or priority indication information, wherein the first time period is a time interval between the first radio resource and the second radio resource, the rule indication information is used to indicate the radio sub-resource obtained and used by the user equipment, and the priority indication information is used to indicate priority levels of the radio sub-resource used by the user equipment and a radio sub-resource used by user equipment adjacent to the user equipment.

34. The base station according to any one of claims 28 to 33, wherein the resource configuration information comprises the period of the radio resource, wherein the radio resource is allocated by the base station to the user equipment, and the period is less than 10 milliseconds ms.
